# EUROPÄISCHE PATENTANMELDUNG

(11) **EP 1 582 260 A1**
(43) Veröffentlichungstag der Anmeldung: **05.10.2005**
(21) Anmeldenummer: 05102366.1
(22) Anmeldetag: 24.03.2005
(51) Int. Cl.: B02C 18/18, A01F 29/20

(54) **Einrichtung zur Verstellung der Position einer Gegenschneide gegenüber einer Häckseleinrichtung**

(30) Priorität: 01.04.2004 DE 102004016089
(71) Anmelder: DEERE & COMPANY, Moline, Illinois 61265-8098 (US)
(72) Erfinder: Wolf, Helmut, 66482, Zweibrücken (DE); Clauss, Steffen, Dr., 66509, Rieschweiler-Mühlbach (DE); Engel, Manfred, 66484, Grosssteinhausen (DE)
(74) Vertreter: Holst, Sönke

(57) **Zusammenfassung**

Die Erfindung bezieht sich auf eine Einrichtung zur Verstellung der Position einer Gegenschneide (38) gegenüber Messern (48) einer Häckseleinrichtung (22). Die Einrichtung arbeitet derart, dass der erste Verstellantrieb (40) das erste Ende der Gegenschneide (38) in einer vorbestimmten ersten Entfernung von den Messern (48) positioniert und der zweite Verstellantrieb (42) bewegt das zweite Ende der Gegenschneide (38) in Richtung auf die Messer (48) zu, bis die Abstandsmesseinrichtung (44) einen Signalwert erfasst, der darauf hinweist, dass der Abstand zwischen der Gegenschneide (38) und den Messern (48) unter einem Schwellenwert liegt. Analog wird mit dem ersten Verstellantrieb (40) vorgegangen. Anhand der Messwerte wird die Gegenschneide (38) in eine Position verbracht, die einem gewünschten Spalt zwischen Gegenschneide (38) und Messern (48) entspricht.

Es wird vorgeschlagen, dass die erste Entfernung und die zweite Entfernung jeweils größer als der gewünschte Spalt zwischen Gegenschneide (38) und Messern (48) sind.

## Beschreibung

Die Erfindung betrifft eine Einrichtung zur Verstellung der Position einer Gegenschneide gegenüber Messern einer Häckseleinrichtung gemäß dem Oberbegriff des Anspruchs 1.

Bei Feldhäckslern ist der Abstand zwischen den Häckselmessern und der Gegenschneide eine für die Schnittqualität und die zum Schneiden aufzubringende Leistung wichtige Größe. Derartige Gegenschneiden sind in der Regel durch Elektromotore gegenüber der Häckseltrommel verstellbar angeordnet, wobei beiden seitlichen Enden der Gegenschneide jeweils ein Elektromotor zugeordnet ist. Ein Abstandssensor, der in der Regel als Klopf-oder als magnetischer Abstandssensor ausgestaltet ist, erfasst ein Signal, das eine Information über den Abstand zwischen der Gegenschneide und dem ihr jeweils nächsten Messer der Häckseltrommel enthält.

Im Stand der Technik sind verschiedene Vorgehensweisen bekannt, um eine Gegenschneide durch eine selbsttätig arbeitende Ansteuerung der Elektromotore in die gewünschte Position gegenüber der Häckseltrommel zu verbringen.

Die EP 0 291 216 A schlägt vor, zunächst beide Enden der Gegenschneide von der Häckseltrommel fort zu bewegen. Dann wird zunächst ein Ende der Gegenschneide zur Häckseltrommel hin bewegt, bis ein Sensor einen Kontakt zwischen Gegenschneide und Häckseltrommel nachweist. Das betreffende Ende der Gegenschneide wird dann von der Häckseltrommel um eine erste Entfernung fortbewegt und das andere Ende der Gegenschneide zur Häckseltrommel hin bewegt, bis ein Sensor einen Kontakt zwischen Gegenschneide und Häckseltrommel nachweist. Dann wird das andere Ende wieder um die erste Entfernung von der Häckseltrommel abgezogen. Die Prozedur wird sukzessive durchgeführt, bis beide Motoren bei ihrer Aktivierung einen Kontakt zwischen Gegenschneide und Häckseltrommel verursachen. Dann wird die Gegenschneide an beiden Enden um einen Weg von etwa 0,127 bis 0,254 mm von der Häckseltrommel abgezogen.

Die EP 0 335 256 A beschreibt eine Einrichtung, bei der ein Ende der Gegenschneide durch einen ersten Motor in Richtung auf die Häckseltrommel bewegt wird, bis ein Kontakt vorliegt. Dann wird die Gegenschneide durch den ersten Motor wieder abgezogen, bis kein Kontakt mehr vorliegt. Dann wird der andere Verstellmotor aktiviert, bis ein Kontakt vorliegt, und gegensinnig aktiviert, bis der Kontakt zwischen Gegenschneide und Häckseltrommel verschwindet. Dieser Einstellvorgang wird einmal wiederholt, wobei nach der jeweils letzten Einstellung auf jeder Seite ein gewünschtes Spaltmaß durch Abziehen der Gegenschneide eingestellt wird.

Die DE 100 21 659 A schlägt vor, zunächst ein Ende der Gegenschneide in Richtung auf die Häckseltrommel zu bewegen, bis eine Berührung eintritt und dann wieder um einen Abstand, der dem gewünschten Spalt entspricht, abzuziehen. Danach wird das jeweils andere Ende an die Häckseltrommel herangefahren, bis ein Kontakt auftritt und ebenfalls um einen Abstand, der dem gewünschten Spalt entspricht, von der Häckseltrommel fort bewegt. Alternativ wird die Gegenschneide zuerst in eine Parallelausrichtung zur Häckseltrommel verbracht und dann wird der endgültige Abstand durch gleichläufiges Bewegen beider Enden eingestellt. Für eine derartige Einstellweise ist ein sehr exakt arbeitender Abstandssensor erforderlich.

In der EP 1 080 630 A wird vorgeschlagen, zuerst ein Ende der Gegenschneide an die Häckseltrommel heranzubewegen, bis ein geeigneter Spalt vorliegt. Dann wird das andere Ende in den gewünschten Abstand verfahren.

Die bekannten Vorgehensweisen bei der Einstellung der Gegenschneide gegenüber der Häckseltrommel umfassen somit stets einen Schritt, bei dem ein erstes Ende der Gegenschneide in die Nähe der Häckseltrommel verbracht wird. Anschließend wird das andere Ende der Gegenschneide an die Häckseltrommel bewegt. Dieses Vorgehen beruht auf der grundlegenden Annahme, dass die Häckseleinrichtung zylindrisch oder konkav hergestellt und geschliffen ist. Das jeweils nicht bewegte Ende der Gegenschneide befindet sich in einem relativ geringen Abstand von der Häckseleinrichtung, so dass man davon ausgehen kann, dass aufgrund der zylindrischen oder konkaven Form der Häckseltrommel eine Annäherung oder ein Kontakt zwischen Gegenschneide und Häckseleinrichtung zuerst am jeweils bewegten Ende der Gegenschneide stattfindet. Basierend auf den gewonnenen Messwerten wird jeweils die Sollposition der Gegenschneide ermittelt.

Problematisch ist diese Vorgehensweise, wenn die Form der Häckseleinrichtung konvex ist. Diese Form kann z. B. durch eine erhöhte Abnutzung im äußeren Bereich der Häckseleinrichtung aufgrund ungleichmäßiger Gutzufuhr entstehen, bei der am Rand größere Mengen von Erntegut zugeführt werden als in der Mitte, oder aufgrund von Schleifvorgängen, bei denen der Schleifstein am Rand größere Einwirkzeiten als in der Mitte der Häckseleinrichtung hat.

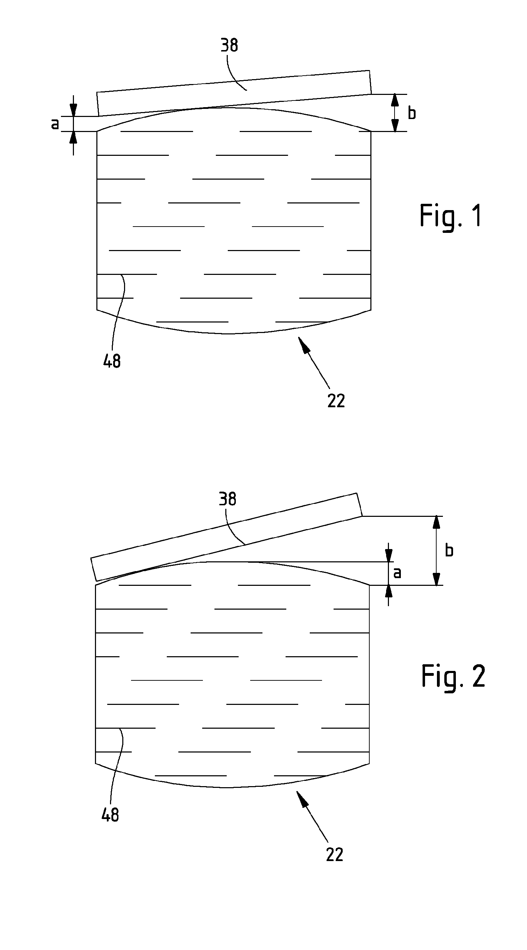

Zur Illustration wird auf die Figuren 1 und 2 verwiesen. Die Häckseleinrichtung 22 ist konvex, wobei die Konvexität a zu Zwecken der Illustration übertrieben dargestellt ist. Sie kann in konkreten Anwendungsfällen beispielsweise 0,5 mm bei einer Breite der Häckseleinrichtung 22 von etwa 700 bis 850 mm und einem Durchmesser der Häckseleinrichtung 22 von etwa 600 mm betragen. Je nach Entfernung b des nicht verstellten Endes der Gegenschneide 38 kommt die Gegenschneide 38 weiter am Rand oder in der Mitte der Häckseleinrichtung 22 zur Berührung mit den Messern 48. In der Figur 1 ist der Abstand b zwischen Häckseleinrichtung 22 und dem nicht verstellten Ende der Gegenschneide 38 relativ klein, so dass sich der Kontakt zwischen der Gegenscheide 38 und der Häckseleinrichtung 22 in der Nähe ihrer Mitte einstellt. In der Figur 2 ist der Abstand b wesentlich größer gewählt, so dass der Kontakt zwischen der Gegenschneide 38 und der Häckseleinrichtung 22 in der Nähe des linken Rands eintritt.

Falls der Abstand b zwischen dem nicht verstellten Ende der Gegenschneide und der Häckseleinrichtung bei der Annäherung des jeweils anderen Endes der Gegenschneide an die Häckseleinrichtung unterschiedlich ist, erfolgt der Kontakt somit an verschiedenen axialen Positionen. Bei einer Vorgehensweise, bei der die Gegenschneide alternierend und sukzessive an beiden Enden auf die Häckseleinrichtung zu bewegt wird, ist die Ausrichtung zwischen dem von den Messern beschriebenen Hüllkreis und der Gegenschneide zufallsabhängig und eine parallele Ausrichtung kaum möglich.

Das der Erfindung zu Grunde liegende Problem wird darin gesehen, eine Einrichtung zur Verstellung einer Gegenschneide bereitzustellen, bei der auch bei konvexen Häckseleinrichtungen eine parallele Einstellung zwischen der Gegenschneide und dem von den Messern der Häckseleinrichtung beschriebenen Hüllkreis möglich ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Einrichtung zur Verstellung der Position der Gegenschneide umfasst zwei bidirektional arbeitende Verstellantriebe, die jeweils einem Ende der Gegenschneide zugeordnet sind, eine Abstandsmesseinrichtung zur Erfassung des Abstands bzw. einer Berührung zwischen der Gegenschneide und den Messern der Häckseleinrichtung sowie eine elektronische Steuerung, die mit den Verstellantrieben und der Abstandsmesseinrichtung verbunden ist. Es wird vorgeschlagen, abwechselnd ein Ende der Gegenschneide in eine vorbestimmte Entfernung von den Messern der Häckseleinrichtung zu verbringen, der größer als der gewünschte Spalt zwischen Gegenschneide und den Messern ist. Das jeweils andere Ende der Gegenschneide wird in Richtung auf die Häckseleinrichtung bewegt, bis die Abstandsmesseinrichtung ein Signal abliefert, das darauf hinweist, dass der Abstand zwischen der Gegenschneide und den Messern kleiner als ein bestimmter Schwellenwert ist bzw. eine Berührung vorliegt. Basierend auf der gewonnenen Information über den Hüllkreis der Messer wird die Gegenschneide durch eine Aktivierung der Verstelleinrichtungen anschließend selbsttätig in eine Position gebracht, bei der die Gegenschneide parallel zur Häckseleinrichtung positioniert ist und ein gewünschter Spalt zwischen Gegenschneide und Messern erzielt wird.

Durch die gegenüber dem Stand der Technik vergrößerte (erste und zweite) Entfernung des jeweils nicht verstellten Endes der Gegenschneide von den Messern, die größer als der gewünschte Spalt zwischen Häckseltrommel und Gegenschneide ist, wird eine Information über die Position des Hüllkreises der Messer erzeugt, die am Rand der Häckseleinrichtung gewonnen werden kann. Bei einer konvexen Häckseleinrichtung wird somit die in der Figur 2 dargestellte Situation realisiert. Auf diese Weise erreicht man auch bei konvexen Häckseleinrichtungen eine parallele Einstellung der Gegenschneide zur Häckseleinrichtung. Die Schnittqualität wird verbessert und der Kraftaufwand beim Häckseln reduziert.

Die erste und zweite Entfernung b in Figur 2 kann anhand eines empirisch ermittelten Werts a für die maximale Konvexität oder Balligkeit einer Häckseleinrichtung und der Breite der Häckseleinrichtung berechnet werden. Der Wert für b ergibt sich aus der Tangente an den Hüllkreis der Häckseleinrichtung an dem Anlagepunkt der Gegenschneide und ihrem Schnittpunkt mit dem Lot durch das andere Ende der Häckseleinrichtung.

Nachdem Informationen hinsichtlich der Positionen der Gegenschneide erfasst wurden, bei denen die Abstandsmesseinrichtung eine Unterschreitung eines Schwellenwerts des Abstands zwischen Gegenschneide und Häckseleinrichtung signalisiert hat, ist die Gegenschneide noch in die gewünschte Position zu verbringen. Diese Bewegung erfolgt vorzugsweise derart, dass beide Verstellantriebe gleichzeitig aktiviert werden, um in möglichst kurzer Zeit den gewünschten Spalt zwischen Gegenschneide und Häckseleinrichtung zu realisieren.

Die beschriebene Herstellung der Parallelität der Gegenschneide zum Hüllkreis der Messer ist grundsätzlich nur nach größeren Reparaturen oder Änderungen an der Häckseleinrichtung erforderlich, beispielsweise nach einem Wechsel einiger oder aller Messer, der Gegenschneide oder Änderungen an der Verstellmechanik. Alle anderen Verstellvorgänge, z. B. nach einem Schleifvorgang, erfordern diese Herstellung der Parallelität, die relativ zeitaufwändig ist, grundsätzlich nicht. Es wird daher vorgeschlagen, nach einer ersten Herstellung der Parallelität die Verstellantriebe nur noch synchron zu aktivieren, ohne die Enden der Gegenschneide zuvor parallel zur Häckseleinrichtung auszurichten, d. h. sie in die erste bzw. zweite Entfernung von den Messern zu verbringen und das jeweils andere Ende der Gegenschneide in Kontakt mit den Messern zu bringen. Dadurch können die Einstellvorgänge wesentlich verkürzt werden. Weiterhin durchzuführen ist hingegen eine parallele Verschiebung beider Enden der Gegenschneide, um einen gewünschten Schneidspalt zu realisieren, wobei auch eine Annäherung an die Messer erfolgen kann. Diesem Vorschlag kommt eigenständiger erfinderischer Rang zu, und er kann auch an Einrichtungen zur Einstellung der Position einer Gegenschneide verwendet werden, bei denen die Parallelität der Gegenschneide zur Häckseleinrichtung auf andere als die beschriebene Weise erfolgt, z. B. wie im eingangs erläuterten Stand der Technik.

Die Verstellantriebe weisen ein mehr oder weniger großes mechanisches Spiel auf. Dieses Spiel kann beim Entfernen der Gegenschneide von den Messern ermittelt werden, z. B. indem eine Information über den Verstellweg generiert wird, der erforderlich ist, das Ausgangssignal der Abstandsmesseinrichtung unter das zugehörige Ausgangssignal absinken zu lassen, das darauf hinwies, dass der Abstand zwischen der Gegenschneide und den Messern unter einem Schwellenwert liegt. Soll die Gegenschneide anschließend in die dem gewünschten Spalt entsprechende Position verbracht werden, berücksichtigt die Steuerung das gemessene Spiel selbsttätig. Relevant ist hier insbesondere ein möglicher Unterschied der Spiele der beiden Verstellantriebe, der erfasst und selbsttätig ausgeglichen werden kann. Bei jeder Bewegung wird zunächst der Verstellantrieb, der das größere Spiel aufweist, um den Unterschied beider Spiele in Richtung der nachfolgenden Bewegung der Gegenschneide verstellt.

Die Gegenschneide kann zur abschließenden Entspannung der Verstellantriebe wieder in Richtung auf die Häckseleinrichtung bewegt werden.

Als Abstandsmesseinrichtung können beliebige Sensoren verwendet werden. Verwendbar sind insbesondere Klopfsensoren, die durch Berührungen der Gegenschneide durch die Messer verursachte mechanische Schwingungen erfassen und magnetische Abstandssensoren, die mit einem Permanentmagneten zusammenwirken und Änderungen des Magnetfelds erfassen, die durch in der Nähe vorbeilaufende Messer erzeugt werden.

Die Steuerung benötigt eine Information über die jeweilige Position der Verstellantriebe bzw. die ihnen zugeordneten Enden der Gegenschneide. Diese Information kann anhand eines dem Verstellantrieb zugeführten Aktivierungssignals gewonnen werden, beispielsweise bei Verwendung eines Schrittmotors als Verstellantrieb. Ist der Verstellantrieb ein Gleichstrommotor, kann anhand der Zeitdauer der Aktivierung des Verstellantriebs eine Information über seine Position gewonnen werden. Eine andere Möglichkeit besteht darin, die Position des Endes der Gegenschneide bzw. des Verstellantriebs mittels eines zugeordneten Positionssensors zu erfassen.

Die Erfindung ist zur Verwendung an beliebigen Häckseleinrichtungen mit einer einstellbaren Gegenschneide verwendbar. Es kann sich insbesondere um offene oder geschlossene Häckseltrommeln von selbstfahrenden Feldhäckslern und Scheibenradhäcksler von angebauten oder gezogenen Feldhäckslern handeln.

In den Zeichnungen ist ein nachfolgend näher beschriebenes Ausführungsbeispiel der Erfindung dargestellt. Es zeigt:
- Fig. 1: eine schematische Ansicht einer konvexen Häckseltrommel mit einer Gegenschneide, die etwa mittig an der Häckseltrommel anliegt,
- Fig. 2: eine schematische Ansicht einer konvexen Häckseltrommel mit einer Gegenschneide, die etwa am Rand der Häckseltrommel anliegt,
- Fig. 3: eine schematische teilgeschnittene Seitenansicht einer Erntemaschine, an der die erfindungsgemäße Einrichtung verwendbar ist,
- Fig. 4: eine schematische perspektivische Darstellung einer erfindungsgemäßen Einrichtung zur Verstellung der Position der Gegenschneide gegenüber den Messern der Häckseleinrichtung, und
- Fig. 5a und 5b: ein Flussdiagramm, nach dem die Einrichtung zur Verstellung der Position der Gegenschneide arbeitet.

Die Figuren 1 und 2 sind bereits weiter oben beschrieben worden, so dass sich hier eine weitere Diskussion erübrigt.

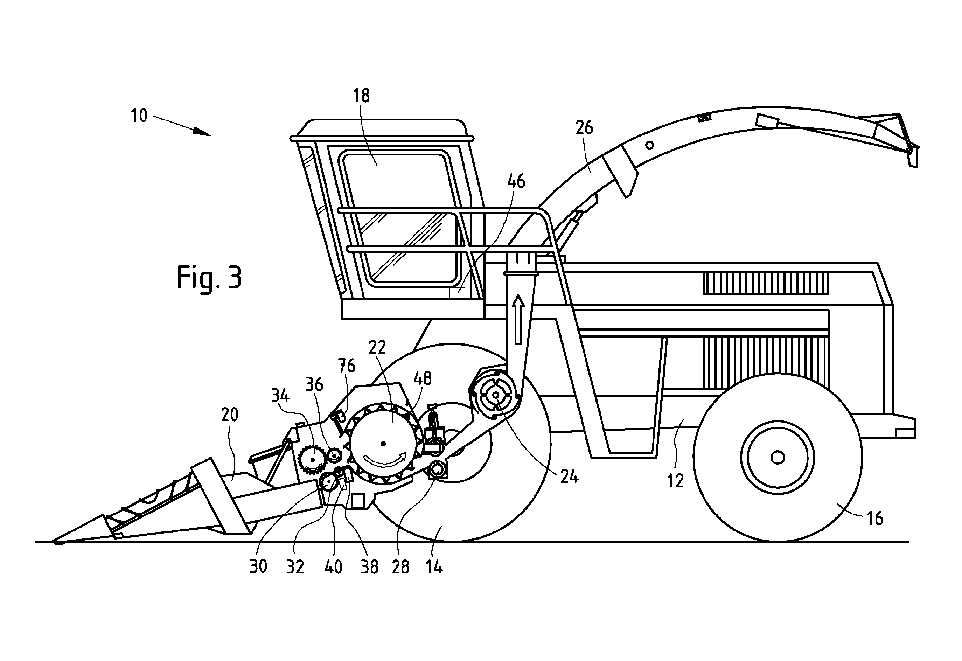

Die Figur 3 stellt eine Erntemaschine 10 in der Art eines selbstfahrenden Feldhäckslers dar, die sich auf einem Rahmen 12 aufbaut, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer mit Messern 48 besetzten Häckseleinrichtung 22 in Form einer Häckseltrommel zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseleinrichtung 22 und der Fördervorrichtung 24 erstreckt sich eine Nachzerkleinerungsvorrichtung 28, durch die das zu fördernde Gut der Fördervorrichtung 24 tangential zugeführt wird.

Zwischen der Erntegutaufnahmevorrichtung 20 und der Häckseleinrichtung 22 wird das Gut durch untere Vorpresswalzen 30, 32 und obere Vorpresswalzen 34, 36 transportiert. Die um den Umfang der Häckseleinrichtung 22 verteilten Messer 48 wirken mit einer Gegenschneide 38 zusammen, um das Gut zu häckseln. Die Gegenschneide 38 ist an beiden Enden mit jeweils einem ersten und einem zweiten Verstellantrieb 40, 42 versehen, die zum Verfahren der Gegenschneide 38 in horizontaler Richtung auf die Häckseltrommel 22 zu und von ihr fort eingerichtet sind. An der Gegenschneide 38 ist außerdem ein Abstandssensor 42 angeordnet. Der Häckseleinrichtung 22 ist weiterhin eine Schleifeinrichtung 76 zugeordnet, um die Messer 48 selbsttätig zu schärfen.

In der Fahrerkabine 18 ist eine digital arbeitende, elektronische Steuerung 46 positioniert, die über einen Analog-Digitalwandler 50 mit dem Abstandssensor 44 und über Digital-Analogwandler 52, 54 mit den Verstellantrieben 40, 42 verbunden ist. Der Abstandssensor 44 ist ein an sich bekannter Klopfsensor, der mechanische Schwingungen erfasst, die in der Gegenschneide 38 durch Messer 48 angeregt werden, die die Gegenschneide 38 berühren. Der Abstandssensor 42 sendet somit Signale an die Steuerung 46, aus denen im Fall der Berührung der Gegenschneide 38 durch die Messer 48 eine entsprechende Information ableitbar ist. Es wäre auch denkbar, jedem Ende der Gegenschneide 38 einen eigenen Abstandssensor 44 zuzuordnen. Die Verstellantriebe 40, 42 sind in der dargestellten Ausführungsform Schrittmotoren. Anhand der Anzahl der Verstellimpulse, mit denen die Steuerung 46 die Verstellantriebe 40, 42 beaufschlagt, ist der Steuerung 46 die jeweilige Position der Verstellantriebe 40, 42 und somit der Gegenschneide 38 bekannt. Zur Kalibrierung der Position der Verstellantriebe 40, 42 besteht die Möglichkeit, letztere gegen einen festen Anschlag zu bewegen, z. B. gegen die stationäre Häckseleinrichtung 22 oder am anderen Ende des Verstellwegs angeordnete Anschläge. Das Erreichen des Anschlags wird der Steuerung 46 durch einen erhöhten Strombedarf der Verstellantriebe 40, 42 signalisiert. Die Verstellantriebe 40, 42 bewegen die Enden der Gegenschneide 38 über Gewindestangen 56, die mit Gewinden in Abschnitten 58 der Gegenschneide 38 bzw. einer Halterung zusammenwirken, an der die Gegenschneide 38 befestigt ist.

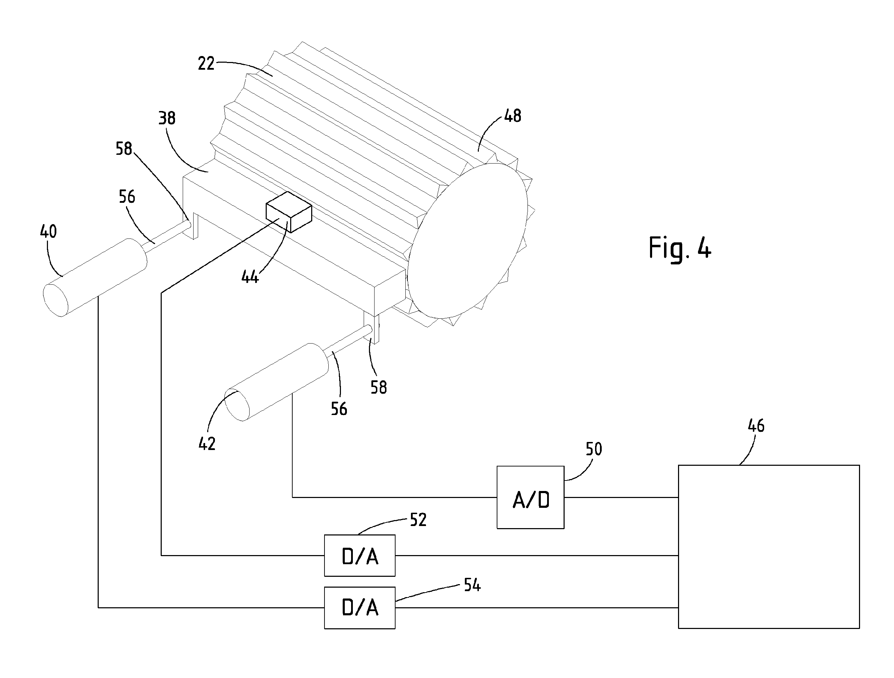

Der hardwaremäßige Aufbau der in der Figur 4 dargestellten Einrichtung zur Verstellung der Position der Gegenschneide 38 ist an sich hinreichend bekannt, so dass hier auf eine weitere Beschreibung verzichtet wird.

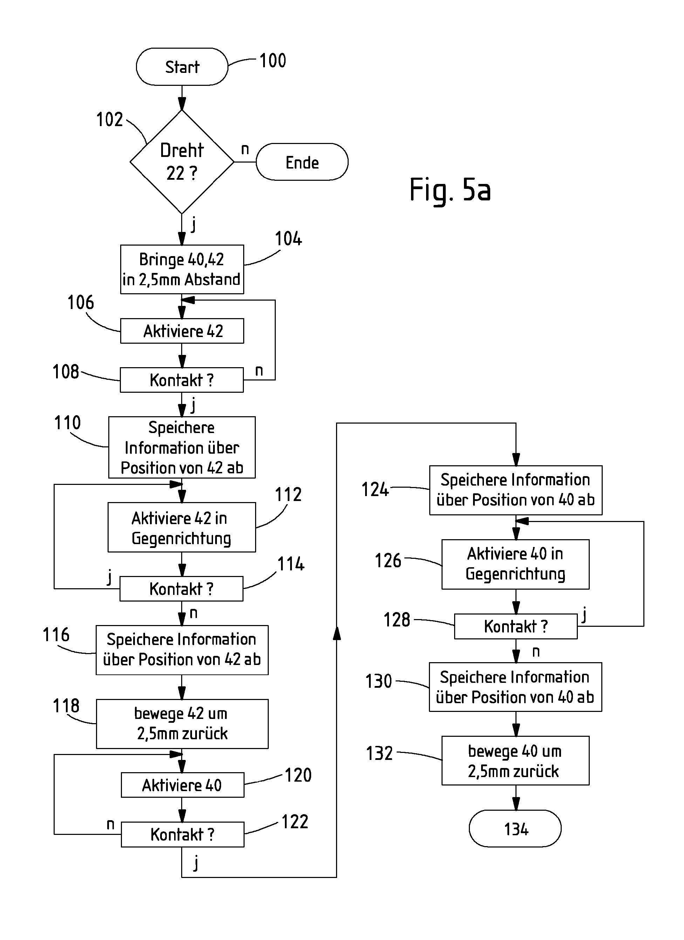

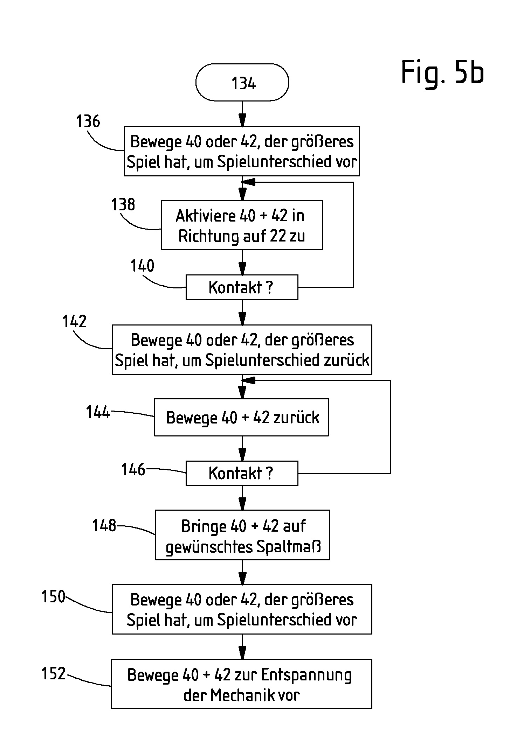

Nachdem ein Messer 48 oder mehrere Messer 48 der Häckseleinrichtung 22 oder die Gegenschneide im Verschleiß- oder Fehlerfall ausgetauscht wurden oder Arbeiten an der Verstellmechanik zwischen den Verstellantrieben 40, 42 und der Gegenschneide 38 ausgeführt wurden, ist die Parallelität der Gegenschneide 38 zum Hüllkreis der Messer 48 und die Größe des Spalts dazwischen nicht mehr sicher gewährleistet. In diesem Fall wird die Steuerung 46 vorgehen, wie in der Figur 5 dargestellt.

Nach einer entsprechenden Eingabe des Bedieners in eine mit der Steuerung 46 verbundene Eingabeeinrichtung oder selbsttätig, nachdem die beschriebenen Arbeiten durch Sensoren erkannt oder entsprechende Eingaben in die Steuerung 46 durchgeführt wurden, wird im Schritt 100 die Einstellroutine aufgerufen. Die Steuerung 46 fragt im Schritt 102 ab, ob die Häckseleinrichtung 22 rotiert, da nur dann eine Verstellung der Gegenschneide 38 möglich ist. Ist das nicht der Fall, wird die Routine abgebrochen und ggf. der Bediener informiert. Dreht sich hingegen die Häckseleinrichtung 22, folgt der Schritt 104, in dem die Verstellantriebe 40, 42 veranlasst werden, die ihnen zugeordneten Enden der Gegenschneide in einen Abstand von 2,5 mm von der Häckseleinrichtung 22 zu verbringen. Bei diesem Schritt 104 wird davon ausgegangen, dass die Gegenschneide 38 in ihrer Sollposition montiert ist und sich die Verstellantriebe 40, 42 in bekannten Positionen befinden. Ist das nicht der Fall, können entsprechende Eingaben in die Steuerung 46 durchgeführt werden oder eine weitere, nicht dargestellte Routine wird aufgerufen, mit der die Position der Gegenschneide 38 selbsttätig erfasst werden kann; beispielsweise kann sie gegen einen äußeren Anschlag bewegt und die Antriebsströme der Verstellantriebe 40, 42 gemessen werden. Beim Schritt 104 kommt es nicht auf äußerste Präzision an, sondern es reicht aus, wenn die Verstellantriebe 40, 42 innerhalb gewisser Toleranzen in die gewünschte Position verbracht werden.

Danach wird der erste Verstellantrieb 40 deaktiviert, so dass das ihm zugeordnete erste Ende der Gegenschneide in diesem relativ großen Abstand von der Häckseleinrichtung 22 verbleibt.

Befindet sich der zweite Verstellantrieb 42 vor dem Schritt 104 schon in zwischen der im Schritt 104 anzusteuernden Position und einer der Häckseleinrichtung 22 näheren Position, kann er bei Schritt 104 auch dort verbleiben, um die Verstellzeit zu verkürzen. Der zweite Verstellantrieb 42 wird im Schritt 106 veranlasst, das ihm zugeordnete zweite Ende der Gegenschneide 38 in Richtung auf die Häckseleinrichtung 22 zu bewegen. Im Schritt 108 wird der Abstandssensor 44 abgefragt. Weist sein Signal nicht auf einen Kontakt zwischen der Gegenschneide 38 und der Häckseleinrichtung 22 hin, folgt wieder Schritt 106. Anderenfalls wird davon ausgegangen, dass die Gegenschneide 38 die Messer 48 der Häckseleinrichtung 22 berührt. Eine Information hinsichtlich der aktuellen Position des zweiten Verstellantriebs 42 wird abgespeichert (Schritt 110) und der zweite Verstellantrieb 42 wird im Schritt 112 instruiert, das zweite Ende der Gegenschneide 38 wieder von der Häckseleinrichtung 22 abzuziehen.

Im Schritt 114 wird abgefragt, ob das Signal des Abstandssensors 44 noch auf einen Kontakt zwischen Gegenschneide 38 und Messern 48 hinweist. Ist das nicht der Fall, folgt Schritt 112, anderenfalls Schritt 116. Dort wird eine Information über die aktuelle Position des zweiten Verstellantriebs 42 abgespeichert, die in Gesamtschau mit der im Schritt 110 erzeugten Position, an der die Abstandsmesseinrichtung 44 auf einen Kontakt hinwies, eine Information über das mechanische Spiel des Verstellantriebs 42 enthält. Dann wird im Schritt 118 der zweite Verstellantrieb veranlasst, das zweite Ende der Gegenschneide 38 um eine Strecke 2,5 mm von den Messern 48 abzuziehen.

Analog wird danach im Schritt 120 der erste Verstellantrieb 40 veranlasst, das ihm zugeordnete erste Ende der Gegenschneide 38 in Richtung auf die Häckseleinrichtung 22 zu bewegen. Im Schritt 122 wird der Abstandssensor 44 abgefragt. Weist sein Signal nicht auf einen Kontakt zwischen der Gegenschneide 38 und der Häckseleinrichtung 22 hin, folgt wieder Schritt 120. Anderenfalls wird davon ausgegangen, dass die Gegenschneide 38 die Messer 48 der Häckseleinrichtung 22 berührt. Eine Information hinsichtlich der aktuellen Position des ersten Verstellantriebs 40 wird abgespeichert (Schritt 124) und der erste Verstellantrieb 40 wird im Schritt 126 instruiert, das erste Ende der Gegenschneide 38 wieder von der Häckseleinrichtung 22 abzuziehen.

Im Schritt 128 wird abgefragt, ob das Signal des Abstandssensors 44 noch auf einen Kontakt zwischen Gegenschneide 38 und Messern 48 hinweist. Ist das nicht der Fall, folgt Schritt 126, anderenfalls Schritt 130. Dort wird eine Information über die aktuelle Position des ersten Verstellantriebs 40 abgespeichert, die in Gesamtschau mit der im Schritt 124 erzeugten Position, an der die Abstandsmesseinrichtung 44 auf einen Kontakt hinwies, eine Information über das mechanische Spiel des Verstellantriebs 40 enthält. Dann wird im Schritt 132 der erste Verstellantrieb 40 veranlasst, das erste Ende der Gegenschneide 38 um eine Strecke von 2,5 mm von den Messern 48 abzuziehen.

Nunmehr ist die Gegenschneide 38 parallel zum Hüllkreis der Messer 48 der Häckseleinrichtung 22 ausgerichtet, da beide Enden um denselben Abstand von 2,5 mm von den Messern 48 abgezogen wurden. Aufgrund des relativ großen Abstands zwischen der Häckseleinrichtung 22 und dem jeweils stationären Ende der Gegenschneide 38 ist gewährleistet, dass die Annäherung oder Berührung zwischen Gegenschneide 38 und Häckseleinrichtung 22 jeweils an dem verstellten Ende der Gegenschneide 38 auftritt und nicht weiter in der Mitte der Häckseleinrichtung 22. Der in der Figur 1 dargestellte Fall wird somit vermieden; die Situation gemäß Figur 2 ist sicher gewährleistet. Die in den Schritten 104, 118 und 132 verwendete Entfernung kann auch vor dem Verstellen der Gegenschneide 38 anhand aktueller Parameter bestimmt werden, indem beispielsweise die Betriebszeit der Häckseleinrichtung 22 und die daraus erfahrungsgemäß resultierende Konvexität ermittelt und zur Festlegung der Entfernung verwendet werden.

Bei den Schritten 106 bis 116 und 120 bis 130 wurden Informationen über die jeweiligen Spiele der Verstellantriebe 40, 42 gewonnen. Diese Spiele sind in der Regel unterschiedlich groß. Um bei den folgenden Verstellvorgängen eine parallele Verstellung der Gegenschneide 38 zu gewährleisten, wird vor jeder Bewegung ein Spielunterschiedsausgleich durchgeführt. Dabei wird der Verstellantrieb 40 oder 42, der das größere Spiel hat, jeweils um den Spielunterschied in die Richtung bewegt, in die die Gegenschneide 38 verstellt werden soll.

Eine erste derartige Bewegung wird im Schritt 134 durchgeführt. Derjenige der Verstellantriebe 40, 42, der das größere Spiel hat, wird veranlasst, die Gegenschneide 38 um eine Entfernung in Richtung auf die Häckseleinrichtung 22 zu bewegen, die dem Spielunterschied beider Verstellantriebe 40, 42 entspricht.

Es folgt der Schritt 138, in dem beide Verstellantriebe 40, 42 gleichzeitig aktiviert werden, die Gegenschneide 38 in Richtung auf die Häckseleinrichtung 22 zu bewegen. Im Schritt 140 wird die Abstandsmesseinrichtung 44 abgefragt. Liegt kein Kontakt vor, folgt Schritt 138, anderenfalls Schritt 142. Darin wird der Verstellantrieb 40 oder 42, dessen anhand der Schritte 116 und 130 ermitteltes Spiel größer ist, um den Unterschied beider Spiele zurückbewegt. Dadurch vermeidet man Unparallelitäten aufgrund unterschiedlicher mechanischer Spiele oder Hysteresen der Verstellantriebe 40, 42.

Es folgt der Schritt 144, in dem beide Verstellantriebe 40, 42 veranlasst werden, die Gegenschneide 38 von der Häckseleinrichtung 22 abzuziehen. Im Schritt 146 erfolgt eine Abfrage, ob der Abstandssensor 44 noch ein Signal liefert, das auf einen Kontakt zwischen Gegenschneide 38 und Messern 48 hinweist. Ist das der Fall, folgt wieder Schritt 144, sonst der Schritt 148, in der die Verstellantriebe 40 und 42 veranlasst werden, die Gegenschneide 38 in einen Abstand von der Häckseleinrichtung 22 zu bewegen, die dem gewünschten Spalt entspricht. Er kann beispielsweise 0,2 mm betragen. Anschließend wird im Schritt 150 der Verstellantrieb 40 oder 42, dessen anhand der Schritte 116 und 130 ermitteltes Spiel größer ist, um den Unterschied beider Spiele vorbewegt, in Richtung auf die Häckseleinrichtung 22 zu. Schließlich werden die Verstellantriebe 40, 42 veranlasst, die Gegenschneide 38 gleichzeitig in Richtung auf die Häckseleinrichtung 22 zu bewegen, um die Mechanik zu entspannen und zu verhindern, dass die Gegenschneide 38 beim nachfolgenden Erntevorgang zurückspringt.

Nunmehr ist die Gegenschneide 38 parallel zur Häckseleinrichtung 22 ausgerichtet und schließt mit ihr den gewünschten Spalt ein. Nach einem Schleifvorgang mittels der Schleifeinrichtung 76, der nach einer bestimmten Betriebszeit auf Veranlassung des Bedieners oder selbsttätig durchgeführt wird, ist die Gegenschneide 38 neu zu positionieren. Dabei erübrigen sich jedoch die Schritte 102 bis 132, so dass die dann erforderliche Routine zur Einstellung der Position der Gegenschneide 38 nur die Schritte 136 bis 154 umfasst. Dieser Vorgang ist in relativ kurzer Zeit durchführbar.

## Patentansprüche

1. Einrichtung zur Verstellung der Position einer Gegenschneide (38) gegenüber Messern (48) einer Häckseleinrichtung (22),
mit einem ersten, bidirektional arbeitenden Verstellantrieb (40), der eingerichtet ist, ein erstes Ende der Gegenschneide (38) in Richtung auf die Messer (48) der Häckseleinrichtung (22) zu und von ihnen fort zu bewegen,
einem zweiten, bidirektional arbeitenden Verstellantrieb (42), der eingerichtet ist, ein zweites Ende der Gegenschneide (38) in Richtung auf die Messer (48) der Häckseleinrichtung (22) zu und von ihnen fort zu bewegen,
einer Abstandsmesseinrichtung (44), die eingerichtet ist, eine Information über einen Abstand der Gegenschneide (38) von den Messern (48) und/oder einen Kontakt beider bereitzustellen,
und mit einer Steuerung (46), die mit dem ersten Verstellantrieb (40), dem zweiten Verstellantrieb (42) und der Abstandsmesseinrichtung (44) verbunden ist und betreibbar ist, Folgendes zu veranlassen:
der erste Verstellantrieb (40) positioniert das erste Ende der Gegenschneide (38) in einer vorbestimmten ersten Entfernung von den Messern (48),
der zweite Verstellantrieb (42) bewegt das zweite Ende der Gegenschneide (38) in Richtung auf die Messer (48) zu, bis die Abstandsmesseinrichtung (44) einen Signalwert erfasst,
der darauf hinweist, dass der Abstand zwischen der Gegenschneide (38) und den Messern (48) unter einem Schwellenwert liegt,
der zweite Verstellantrieb (42) positioniert das zweite Ende der Gegenschneide (38) in einer vorbestimmten zweiten Entfernung von den Messern (48),
der erste Verstellantrieb (40) bewegt das erste Ende der Gegenschneide (38) in Richtung auf die Messer (48) zu, bis die Abstandsmesseinrichtung (44) einen Signalwert erfasst, der darauf hinweist, dass der Abstand zwischen der Gegenschneide (38) und den Messern (48) unter einem Schwellenwert liegt,
und die Verstellantriebe (40, 42) bewegen das erste und zweite Ende der Gegenschneide (38) basierend auf gewonnenen Informationen hinsichtlich der Positionen, an denen die Abstandsmesseinrichtung (44) den Signalwert erfasst hat,
der darauf hinweist, dass der Abstand zwischen der Gegenschneide (38) und den Messern (48) unter einem Schwellenwert liegt, in Positionen, die einem gewünschten Spalt zwischen Gegenschneide (38) und Messern (48)
entsprechen,
**dadurch gekennzeichnet, dass** das erste und zweite Ende der Gegenschneide (38) in der ersten und zweiten Entfernung jeweils weiter von den Messern (48) beabstandet sind als der gewünschte Spalt zwischen der Gegenschneide (38) und den Messern (48) breit ist.

2. Einrichtung nach Anspruch 1, **dadurch gekennzeichnet, dass** die Messer (48) der Häckseleinrichtung (22) eine konvexe Hüllkurve beschreiben, und dass die erste und zweite Entfernung hinreichend groß sind, so dass das jeweils bewegte Ende der Gegenschneide (38) mit dem äußeren Rand der Häckseleinrichtung (22) zusammen wirken kann.

3. Einrichtung nach Anspruch 1 oder 2, **dadurch gekennzeichnet, dass** die Steuerung (46) betreibbar ist, die Gegenschneide (38) parallel zum Hüllkreis der Messer (48) auszurichten und danach beide Verstellantriebe (40, 42) gleichzeitig zu aktivieren, um die Gegenschneide (38) in die Position zu bewegen, die einem gewünschten Spalt zwischen der Gegenschneide (38) und den Messern (48) entspricht.

4. Einrichtung nach einem der Ansprüche 1 bis 3, **dadurch gekennzeichnet, dass** die Steuerung (46) betreibbar ist, bei Verstellvorgängen, die nach einer Ausrichtung der Gegenschneide (38) parallel zur Häckseleinrichtung (22) erfolgen, z. B. nach einem Schleifvorgang, die Verstellantriebe (40, 42) parallel zu aktivieren.

5. Einrichtung nach einem der Ansprüche 1 bis 4, **dadurch gekennzeichnet, dass** die Steuerung (46) betreibbar ist, beim Zurückbewegen der Verstellantriebe (40, 42) aus den Positionen, an denen die Abstandsmesseinrichtung (44) einen Signalwert erfasst, der darauf hinweist, dass der Abstand zwischen der Gegenschneide (38) und den Messern (48) unter einem Schwellenwert liegt, zur Ermittlung des jeweiligen mechanischen Spiels der Verstellantriebe (40, 42), eine Information über den Verstellweg zu erfassen, der zur Erzeugung eines Signalwerts der Abstandsmesseinrichtung (44) erforderlich ist, der nicht mehr darauf hinweist, dass der Abstand zwischen der Gegenschneide (38) und den Messern (48) unter dem Schwellenwert liegt, und den Unterschied der Spiele der Verstellantriebe (40, 42) bei der Bewegung der Gegenschneide (38) in die Position, die einem gewünschten Spalt zwischen Gegenschneide (38) und Messern (48) entspricht, zu berücksichtigen.

6. Einrichtung nach Anspruch 5, **dadurch gekennzeichnet, dass** die Steuerung (46) betreibbar ist, bei einer Verstellung der Gegenschneide (38) zunächst den Verstellantrieb (40, 42), der das größere Spiel aufweist, um den Unterschied der Spiele beider Verstellantriebe (40, 42) in Richtung der nachfolgenden Bewegung der Gegenschneide (38) zu bewegen.

7. Einrichtung nach einem der Ansprüche 1 bis 6, **dadurch gekennzeichnet, dass** die Steuerung (46) betreibbar ist, die Verstellantriebe (40, 42) zu veranlassen, die Gegenschneide (38) zur Entspannung der Mechanik in Richtung auf die Häckseleinrichtung (22) zu bewegen.

8. Einrichtung nach einem der Ansprüche 1 bis 7, **dadurch gekennzeichnet, dass** die Abstandsmesseinrichtung (44) ein Klopfsensor und/oder ein magnetischer Abstandssensor ist.

9. Einrichtung nach einem der Ansprüche 1 bis 8, **dadurch gekennzeichnet, dass** die Steuerung (46) betreibbar ist, eine Information über die Position eines Endes der Gegenschneide (38) anhand eines dem Verstellantriebs zugeführten Aktivierungssignals und/oder anhand der Zeitdauer der Aktivierung eines Verstellantriebs und/oder mittels eines dem Verstellantrieb zugeordneten Positionssensors zu erfassen.

10. Erntemaschine (10), insbesondere Feldhäcksler, mit einer Häckseleinrichtung (22) und einer Einrichtung nach einem der vorhergehenden Ansprüche.
